# EUROPEAN PATENT SPECIFICATION

(11) **EP 2 457 823 B1**
(45) Date of publication and mention of the grant of the patent: **31.05.2017**
(21) Application number: 11191404.0
(22) Date of filing: 30.11.2011
(51) Int. Cl.: B64C 3/18, B64C 3/26

(54) **An aircraft lifting surface skin**
Flugzeugtragflächenhaut
Peau de surface portante d'un avion

(30) Priority: 30.11.2010 ES 201031770
(43) Date of publication of application: 30.05.2012
(73) Proprietor: Airbus Operations S.L., 28906 Madrid (ES)
(72) Inventor: Outon Hernández, Ignacio, 28320 Pinto, Madrid (ES); Gómez del Valle, Javier Carlos, 28002 Madrid (ES)
(74) Representative: Elzaburu S.L.P.

(56) References cited:
- EP-A1- 1 942 052
- EP-A2- 0 230 682
- WO-A1-2008/132498
- WO-A2-2008/007135

## Description

### FIELD OF THE INVENTION

This invention refers to the skin of an aircraft lifting surface skin and, more in particular, to an stiffening arrangement for those skin panels which can not be stiffened by stringers.

### BACKGROUND OF THE INVENTION

The main structure for aircraft lifting surfaces mainly consists of a leading edge, a torsion box, a trailing edge, a root joint and a wing tip. The torsion box in turn consists of several structural elements: upper and lower skins stiffened by stringers on one side; spars and ribs on the other side. Those stringers, spars and ribs create a grid pattern that subdivides the upper and the lower skins in structural panels limited now by those elements, discretizing that way the bulking loads in the skins. Typically, the structural elements forming the torsion box are manufactured separately and are joined with the aid of complicated tooling to achieve the necessary tolerances, which are given by the aerodynamic, assembly and structural requirements.

As is well known, weight is a fundamental aspect in the aeronautic industry and therefore there is a current trend to use composite material instead of metallic even for primary structures.

The composite materials that are most used in the aeronautical industry consist of fibers or fiber bundles embedded in a matrix of thermosetting or thermoplastic resin, in the form of a preimpregnated or "prepreg" material. Its main advantages refer to:
- Their high specific strength with respect to metallic materials. It is the strength/weight equation.
- Their excellent behavior before fatigue loads.
- The possibilities of structural optimization hidden in the anisotropy of the material and the possibility of combining fibers with different orientations, allowing the design of the elements with different mechanical properties adjusted to the different needs in terms of applied loads.

The design and manufacture of large composite skins of aircraft lifting surfaces such as the skins of aircrafts wings involves several problems. One of them is the stabilization of those skin panels which are not stiffened with stringers due to interferences with, particularly, spars or ribs. In the prior art, this stabilization is achieved increasing the panel thickness, increasing, thus, the skin weight which is an important drawback for an aeronautical structure. The document EP 0 230 682 A2 discloses an exemplary solution for reinforcing such an aeronautical structure. This invention is focused on the solution of this problem.

### SUMMARY OF THE INVENTION

One object of the present invention is to provide a multi-rib box-shaped structure of an aircraft lifting surface such as a wing or an horizontal tail plane having skins optimized in weight even in those panels which are not stiffened by span wise stringers due to interferences with another structural elements.

Another object of the present invention is to provide a multi-rib box-shaped structure of an aircraft lifting surface such as a wing or an horizontal tail plane having skins arranged for reducing buckling risks even in those panels which are not stiffened by span wise stringers due to interferences with another structural elements.

These and other objects are met by a multi-rib box-shaped aeronautical structure comprising upper and lower skins arranged as continuous surfaces and stiffened by span wise stringers, span wise front and rear spars and chord wise ribs, structuring the continuous surface of the upper and lower skins in a set of panel portions wherein at least one panel portion is delimited by two consecutive chord wise ribs, the span wise front spar and one span wise stringer that crosses the two consecutive chord wise ribs and is the closest stringer to the front spar, characterized in that the at least one panel portion additionally comprises an isolated stiffening element arranged between the two consecutive chord wise ribs. The stiffening element is an isolated stiffening element in the panel that need reinforcement to withstand the buckling loads. Hereby it is achieved an arrangement that facilitates its installation in said panels.

In a preferred embodiment the stiffening element follow a linear trace between the end of the closer stringer and a final point in said panel at a suitable distance of the structural element that delimits said panel instead of an stringer. Hereby it is achieved an optimized division of said panel for weight reduction purposes.

In a preferred embodiment, the stringers and the stiffening elements have the same transversal shape, preferably a T or a L shape. Hereby it is achieved an arrangement that facilitates the skin manufacturing process.

Other characteristics and advantages of the present invention will be clear from the following detailed description of embodiments illustrative of its object in relation to the attached figures.

### BRIEF DESCRIPTION OF DRAWINGS

Figure 1 a is a perspective view of a known multi-rib torsion box of an aircraft wing and Figure 1 b is a cross-section view of Figure 1 a along plane A-A.
Figure 2 is an internal plan view of an area of a skin belonging to the torsion box of an aircraft wing according to the prior art.
Figure 3 is an internal plan view of an area of a skin belonging to the torsion box of an aircraft wing according to the present invention.
Figure 4 is an internal plan view of an area of a skin belonging to the torsion box of an aircraft wing.

### DETAILED DESCRIPTION OF THE INVENTION

The invention relates to a multi-rib torsion box structure of composite materials with longitudinal stiffeners, having preferably a T-shaped or a L-shaped cross-section. The composite material can be both carbon fiber and fiberglass with thermosetting or thermoplastic resin. The main field of application is aeronautical lifting surfaces structures, although they can also be applied to other structures with similar features.

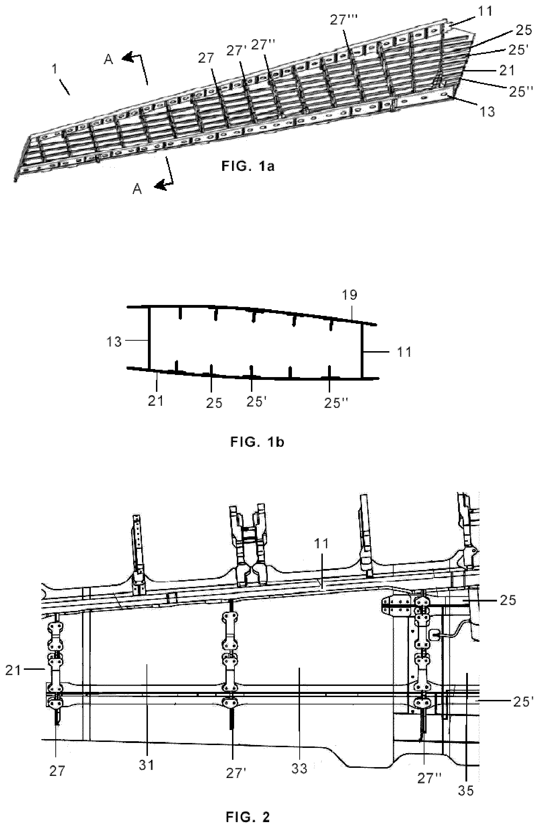

The main structure of an aircraft lifting surface such as a wing consists of a leading edge, a torsion box, a trailing edge, a root joint and a wing tip. A multi-rib torsion box 1 such as the one depicted in Figures 1 a and 1 b is structurally based on a span wise front spar 11 and a span wise rear spar 13 (understanding the terms front and rear in relation to the flight direction of the aircraft), a plurality of chord wise ribs 27, 27', 27", 27"' and the upper and lower skins 19, 21 with a plurality of span wise stringers 25, 25', 25".

The main functions of ribs 27, 27', 27", 27"' is to provide torsion rigidity and to limit the skins 19, 21 and the stringers 25, 25', 25" longitudinally so as to discretize the buckling loads and maintain the shape of the aerodynamic surface.

The primary function of the skins 19, 21 is to provide a continuous surface to give support and distribute the aerodynamic loads and, thus, it is structured as a set of panels delimited by said ribs 27, 27', 27", 27"' and said stringers 25, 25', 25" as well as the front spar 11 and the rear spar 13.

Figure 2 shows a common case where the panels 31, 33 are delimited by the ribs 27, 27', 27', the stringer 25' and the front spar 11. In this case, the stringer 25 cannot be extended to decrease the size of the panels 31, 33 because it would interfere with the front spar 11.

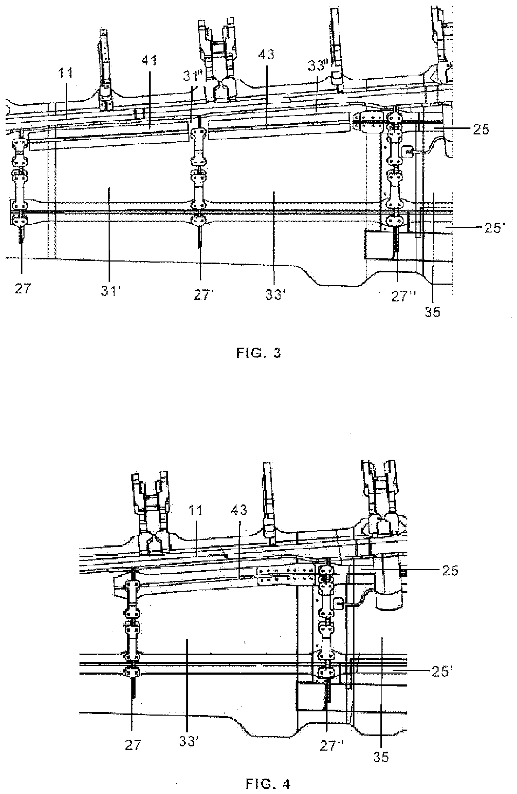

According to the invention those panels 31, 33 lacking one stringer are provided with stiffening elements so that their thickness does not need to be increased to avoid buckling. Those stiffening elements act therefore as panel breakers on the skin decreasing the panels size allowing a thickness decrease and a weight reduction. According to the invention, as illustrated in Figure 3, said stiffening elements 41 are isolated stiffening elements on each panel 31, 33 that, preferably, follow a lineal trace between the end of the stringer 25 in the adjacent panel 35 and a point close to the rib 27 at a suitable distance of the front spar 11 to comply with the structural requirements. Said stiffening elements 41 "break" the initial panels 31, 33 into smaller panels 31', 31"; 33', 33". Panels 31', 33' are now limited by the stiffening elements 41, the stringer 25' and the ribs 27, 27', 27", having thus a smaller area than the initial panels 31, 33 allowing a thickness decrease and a weight reduction.

In an example not covered by the claims, said stiffening elements are installed on the skins 19, 21 joined to another structural element. For instance, as shown in Figure 4, the stiffening element 43 that, preferably, follows a lineal trace between the end of the stringer 25 in the adjacent panel 35 and a point close to the rib 27' at a suitable distance of the front spar 11 to comply with the structural requirements, "breaks" the initial panel 33 into the smaller panels 33', 33". Panel 33' is now limited by the stiffening element 43, the stringer 25' and the ribs 27', 27", having thus a smaller area than the initial panel 33 allowing a thickness decrease and a weight reduction. On the other hand, the stiffening element 43 is joined to the rib 27' and to the stringer 25 ending in the adjacent panel 35, i.e. a joint arrangement that provides a better load continuity and distribution.

The stiffening elements 41, 43 of both embodiments can be installed on the skins 19, 21 by a co-curing or a co-boding procedure or by a riveted joint. In the second case, the trace shall leave enough space between the stiffening element 43 and the front spar 11 to allow the enlargement of the stiffening element foots needed in the joining areas with stringer 25 and rib 27'.

In a preferred embodiment, said stiffening elements 41, 43 shall have the same transversal section than the stringer 25, i.e. a T-shaped or a L-shaped transversal section.

Among others, the advantages of the present invention are the following:
- Reduction of the skin thickness and weight of the involved panels in an amount close to the 20%.
- Reduction of the buckling risk in the skin panels.

Although the present invention has been fully described in connection with preferred embodiments, it is evident that modifications may be introduced within the scope thereof, not considering this as limited by these embodiments, but by the contents of the following claims.

## Claims

1. A multi-rib box-shaped aeronautical structure comprising upper and lower skins (19, 21) arranged as continuous surfaces and stiffened by span wise stringers (25, 25', 25"), span wise front and rear spars (11, 13) and chord wise ribs (27, 27', 27") structuring the continuous surface of the upper and lower skins (19, 21) in a set of panel portions (31, 33) wherein at least one panel portion (31, 33) is delimited by two consecutive chord wise ribs, the span wise front spar (11) and one span wise stringer that crosses the two consecutive chord wise ribs and is the closest stringer to the front spar (11), **characterized in that** the at least one panel portion (31, 33) additionally comprises an isolated stiffening element (41, 43) arranged between the two consecutive chord wise ribs.

2. A multi-rib box-shaped aeronautical structure according to claim 1, wherein the stiffening element (41, 43) follow a linear trace between the end of the stringer (25) that delimits the adjacent panel portion (35) and a point close to the rib (27, 27') separated from the front spar (11).

3. A multi-rib box-shaped aeronautical structure according to any of claims 1-2, wherein said stringers (25, 25', 25") and said stiffening elements (41, 43) have the same transversal shape.

4. A multi-rib box-shaped aeronautical structure according to claim 3, wherein the transversal shape of said stringers (25, 25', 25") and said stiffening elements (41, 43) is a T-shape.

5. A multi-rib box-shaped aeronautical structure according to claim 3, wherein the transversal shape of said stringers (25, 25', 25") and said stiffening elements (41, 43) is an L-shape.

## Patentansprüche

1. Kastenförmige flugtechnische Struktur mit einer Mehrzahl von Rippen, umfassend eine obere und eine untere Außenhaut (19, 21), die als kontinuierliche Flächen angeordnet sind, und die versteift sind durch in Spannweitenrichtung verlaufende Stringer (25, 25', 25"), einen in Spannweitenrichtung verlaufenden vorderen Holm (11), einen in Spannweitenrichtung verlaufenden hinteren Holm (13) und in Profilsehnenrichtung verlaufende Rippen (27, 27', 27"), welche die kontinuierliche Oberfläche der oberen und der unteren Außenhaut (19, 21) in eine Reihe von Paneelabschnitten (31, 33) strukturieren, wobei mindestens ein Paneelabschnitt (31, 33) durch zwei aufeinander folgende in Profilsehnenrichtung verlaufende Rippen, den in Spannweitenrichtung verlaufenden vorderen Holm (11) und einen in Spannweitenrichtung verlaufenden Stringer, der die zwei aufeinander folgenden in Profilsehnenrichtung verlaufende Rippen kreuzt und der dem vorderen Holm (11) nächstliegende Stringer ist, begrenzt wird, **dadurch gekennzeichnet, dass** der mindestens eine Paneelabschnitt (31, 33) zusätzlich ein isolierendes Versteifungselement (41, 44) umfasst, welches zwischen den zwei aufeinander folgenden in Profilsehnenrichtung verlaufenden Rippen angeordnet ist.

2. Kastenförmige flugtechnische Struktur mit einer Mehrzahl von Rippen nach Anspruch 1, wobei das Versteifungselement (41, 43) zwischen dem Ende des Stringers (25), der den benachbarten Paneelabschnitt (35) begrenzt, und einem Punkt nahe der Rippe (27, 27') einer linearen Spur folgt, die von dem vorderen Holm (11) getrennt ist.

3. Kastenförmige flugtechnische Struktur mit einer Mehrzahl von Rippen nach einem der Ansprüche 1 bis 2, wobei die Stringer (25, 25', 25") und die Versteifungselemente (41, 43) dieselbe Querschnittsform aufweisen.

4. Kastenförmige flugtechnische Struktur mit einer Mehrzahl von Rippen nach Anspruch 3, wobei die Querschnittsform der Stringer (25, 25', 25") und der Versteifungselemente (41, 43) eine T-Form ist.

5. Kastenförmige flugtechnische Struktur mit einer Mehrzahl von Rippen nach Anspruch 3, wobei die Querschnittsform der Stringer (25, 25', 25") und der Versteifungselemente (41, 43) eine L-Form ist.

## Revendications

1. Structure aéronautique en forme de caisson à nervures multiples comprenant des revêtements supérieurs et inférieurs (19, 21) disposés en tant que surfaces continues et renforcés par des lisses dans le sens de l'envergure (25, 25', 25"), des longerons avant et arrière dans le sens de l'envergure (11, 13) et des nervures dans le sens de la corde (27, 27', 27") structurant la surface continue des revêtements supérieurs et inférieurs (19, 21) dans un ensemble de parties de panneau (31, 33) dans laquelle au moins une partie de panneau (31, 33) est délimitée par deux nervures dans le sens de la corde consécutives, le longeron avant dans le sens de l'envergure (11) et une lisse dans le sens de l'envergure qui croise les deux nervures consécutives dans le sens de la corde et est la lisse la plus proche du longeron avant (11), **caractérisée en ce que** l'au moins une partie de panneau (31, 33) comprend en outre un élément de renfort isolé (41, 43) agencé entre les deux nervures consécutives dans le sens de la corde.

2. Structure aéronautique en forme de caisson à nervures multiples selon la revendication 1, dans laquelle l'élément de renfort (41, 43) suit une tracé linéaire entre l'extrémité de la lisse (25) qui délimite la partie de panneau adjacente (35) et un point proche de la nervure (27, 27') séparée du longeron avant (11).

3. Structure aéronautique en forme de caisson à nervures multiples selon l'une quelconque des revendications 1 à 2, dans laquelle lesdites lisses (25, 25', 25") et lesdits éléments de renfort (41, 43) ont la même forme transversale.

4. Structure aéronautique en forme de caisson à nervures multiples selon la revendication 3, dans laquelle la forme transversale desdites lisses (25, 25', 25") et desdits éléments de renfort (41, 43) est en forme de T.

5. Structure aéronautique en forme de caisson à nervures multiples selon la revendication 3, dans laquelle la forme transversale desdites lisses (25, 25', 25") et desdits éléments de renfort (41, 43) est en forme de L.
